# EUROPEAN PATENT APPLICATION

(11) **EP 1 463 292 A2**
(43) Date of publication of application: **29.09.2004**
(21) Application number: 04007118.5
(22) Date of filing: 24.03.2004
(51) Int. Cl.: H04N 1/192

(54) **Image exposing apparatus**

(30) Priority: 28.03.2003 JP 2003091710
(71) Applicant: KONICA MINOLTA HOLDINGS, INC., Tokyo 100-0005 (JP)
(72) Inventor: Suzuki, Atsushi, Hachioji-shi Tokyo 192-8505 (JP); Hattori, Tsuyoshi, Hachioji-shi Tokyo 192-8505 (JP)
(74) Representative: Henkel, Feiler & Hänzel

(57) **Abstract**

An image exposing apparatus for exposing an image on a silver halide photosensitive material, including an array light source for emitting a light image, the array light source having a plurality of rows of light emitting devices, each of the plurality of rows having a plurality of light emitting devices arranged in a form of a line, and one of adjoining two rows of the plurality of rows of light emitting devices being shifted in the longitudinal direction to form a zigzag arrangement of light emitting devices; and a light converging device for converging the light image emitted from the array light sources onto a silver halide photosensitive material, wherein an interval between each of the plurality of rows of light emitting device is not larger than 500 µm.

## Description

### BACKGROUND OF THE INVENTION

The present invention relates to an image exposing apparatus, and in particular, to an image exposing apparatus wherein a silver halide photosensitive material is exposed to light image which is emitted from each of plural array light sources and has a different wavelength.

Heretofore, there has been proposed an image exposing apparatus wherein an array light source having plural light emitting devices is provided for each recording color, and a silver halide photosensitive material such as a printing paper is exposed to light image, and the image exposing apparatus has been put to practical use. In recent years, there has been proposed an image exposing apparatus wherein light emitted from an array light source for each recording color is mixed to form a line-shaped light flux, and this line-shaped light flux is converged on a photosensitive material by a light-converging means so that exposure is made (for example, see Patent Document 1). As the light-converging means, there is used a selfoc lens array representing a line-shaped same-size erect image forming lens that is composed of plural selfoc lenses arranged in a single row or in plural rows.

When making exposure by using the image exposing apparatus of this kind, it is necessary to establish a size (pixel size) of a pixel formed on a photosensitive material by exposure to an appropriate value. The reason for this is that when a pixel size is too small to cause a large gap between pixels, it sometimes becomes difficult to obtain high density, resulting in an image that lacks crispness, and when a pixel size is too large to cause considerable overlapping of pixels, on the other hand, line image sometimes becomes thick or an image lacks sharpness, resulting in a decline of image quality.

For establishing a pixel size to an appropriate value with a purpose of preventing the decline of image quality, it is necessary to establish a size of a light emitting device of the array light source to be an appropriate value. As a light emitting device size of the array light source, the size that is close to a distance between centers of light emitting devices, which are brought into a line, is preferable. However, it is difficult in terms of space to bring light emitting devices into a line because electric wiring that controls individual light emitting device is needed, and a precise and specific structure is required, which results in difficult manufacturing and worse yield. Therefore, plural light emitting devices are arranged to be in plural rows, and one of the adjoining rows is shifted in the longitudinal direction to be in a zigzag form, and thereby, the various problems stated above are solved, and a size of the light emitting device is established easily, thus, a decline of image quality is prevented.

Incidentally, it is preferable to make a distance from an array light source to a light-converging means to be as short as possible because light that is emitted from the array light source is diffused. Therefore, arrangement of parts is extremely restricted, including necessity to house a light-mixing member in a small space between the array light source and the light-converging means, and the light-mixing member is required to have compactness and a precise and specific structure. Further, because of the aforementioned restriction on parts arrangement, the array light source is also required to have a specific structure (for example, a structure of a thin type employing a high-strength specific material). Further, in the case of incorporating parts, precision operations wherein a tolerance is small are needed, which results in an increase of manufacturing cost.

For controlling the increase of manufacturing cost caused by the restriction on parts arrangement, a lens having a large aperture (for example, selfoc lens arrays in many rows) is employed as a light-converging means, in recent years. Namely, when, a lens having a large aperture is used, it is possible to make a distance from the array light source to the lens to be relatively long, thereby, the restriction on parts arrangement is eased, and an increase of manufacturing cost can be controlled consequently.

### (Patent Document)

TOKKAI No. 2000-6469 (page 2, Fig. 9)

### (Problems to be solved by the invention)

However, the following problems lie in the image exposing apparatus wherein an array light source having plural light emitting device rows stated above and a lens having a large aperture are employed, and prevention of a decline of image quality and control of manufacturing cost are realized.

Namely, when a lens having a large aperture is employed, dispersion in exposure positions is caused by a difference of characteristic of each lens. In particular, when a selfoc lens array in many rows is used, dispersion in exposure positions tends to be caused by a difference of characteristic of each selfoc lens element and by an assembly error of an array. It is of common knowledge that the longer the selfoc lens is, the easier the dispersion of image forming positions is caused.

Further, when using an array light source having plural light emitting device rows, an exposure line in one row is formed by combining exposure points of respective light emitting device rows, and therefore, "streaks" are easily formed on an image if dispersion of the exposure positions is caused.

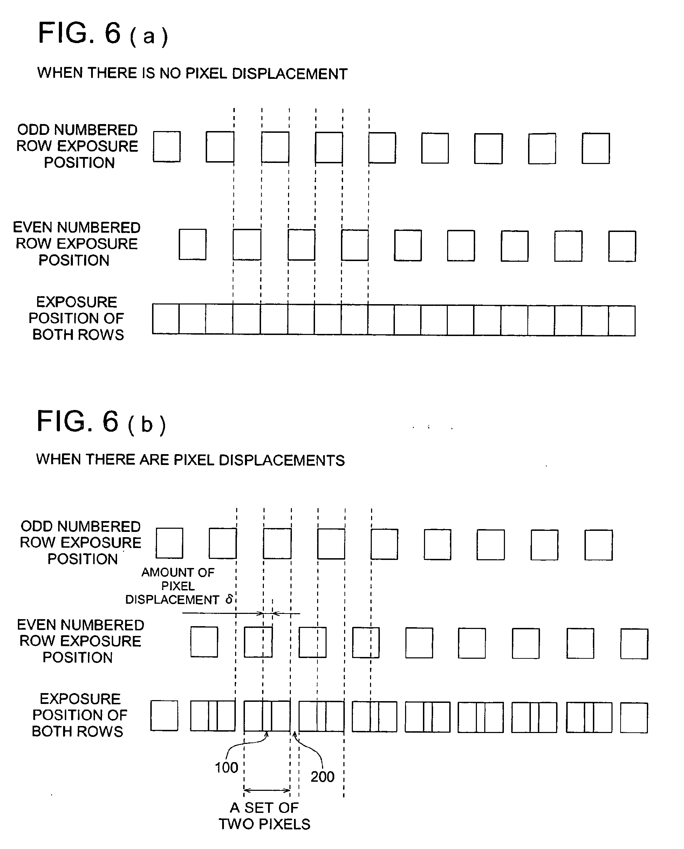

For example, in the case of using a zigzag arrangement array light source (see Fig. 6 (a)) wherein exposure positions of odd-numbered rows are staggered so that each of the odd-numbered rows may be located between the even-numbered rows, when exposure positions for the odd-numbered rows and for the even-numbered rows are deviated, two-pixel overlapped portions 100 and non-exposure portions 200 are formed alternately as shown in Fig. 6 (b), and scanning lines for these two-pixel overlapped portions 100 are made to be "streaks" at regular intervals by sub-scanning such as conveyance of a photosensitive material and a movement of an array light source. The density of these "streaks" is about a half that of writing by the array light source, and further, the "streaks" are emphasized by peculiar characteristics of a silver halide photosensitive material, thus, the streaks are recognized by human eyes, resulting in a decline of image quality.

Though the "streaks" mentioned above are caused by dispersion of exposure positions which have origin in using an array light source having plural light emitting device rows and a lens having a large aperture, and caused by characteristics of a silver halide photosensitive material, manufacturing and selection of lenses having less differences in characteristics of each lens and less errors in assembling bring a cost increase. Further, improvements of characteristics of silver halide photosensitive materials are extremely difficult because a photosensitive mechanism needs to be cleared in detail to begin with.

An objects of the invention is to prevent a decline of image quality by stopping actualization of "streaks" which are formed by dispersion of exposure positions which have origin in using an array light source having plural light emitting device rows and a lens having a large aperture, and by characteristics of a silver halide photosensitive material.

### SUMMARY OF THE INVENTION

The object stated above can be solved by the following structures.

### (Structure 1)

An image exposing apparatus having therein an array light source wherein there are arranged a plurality of rows of light emitting devices in which a plurality of light emitting devices are arranged in a form of a line, and the adjoining light emitting device rows is shifted in the longitudinal direction to form a zigzag form, and a light-converging means that converges emitted light on a silver halide photosensitive material, wherein an interval of the light emitting device rows of array light sources in a zigzag form is established to be within 500 µm.

### (Structure 2)

An image exposing apparatus having therein an array light source group wherein there are arranged a plurality of rows of light emitting devices in which a plurality of light emitting devices are arranged in a form of a line, and one of the adjoining light emitting device rows is shifted in the longitudinal direction to form a zigzag form, a light-mixing means (device) that mixes light emitted from the array light source group and forms emitted light in a line form, and a light-converging means (device) that converges emitted light formed by the light mixing means (device) on a silver halide photosensitive material, wherein an interval of the light emitting device rows of array light sources in a zigzag form is established to be within 500 µm.

In the Structures (1) and (2), it is possible to stop actualization of "streaks" which are formed by dispersion of exposure positions of light emitted from the array light source group, because an interval of the light emitting device rows of array light sources in a zigzag form is established to be within a specific range (within 500 µm). AS a result, a decline of image quality can be prevented.

### (Structure 3)

The image exposing apparatus according to the Structure (1) or (2), wherein the light-converging means (device) is a selfoc lens array in which a plurality of rows of selfoc lens devices (elements) are arranged.

In the Structure (3), it is possible to take a distance from the array light source group to the light-converging means to be relatively long and to ease restriction for parts arrangement, because selfoc lens arrays in plural rows representing lenses each having a large aperture are used as a light-converging means. As a result, an increase of manufacturing cost can be controlled.

### (Structure 4)

The image exposing apparatus according to any one of the Structures (1) to (3), wherein writing density of the array light source is established to be 210 dpi or more.

In the Structure (4), it is possible to prevent actualization of scanning lines, because writing density for the array light source group is established to be 210 dpi or more. Namely, when the writing density for the array light source group is lower than 210 dpi, scanning lines becomes conspicuous, and thereby, image quality is lowered even when "streaks" are not formed. However, it is possible to make the scanning lines not to be conspicuous by establishing writing density for the array light source group to be 210 dpi or more. Therefore, a decline of image quality can be prevented.

### (Structure 5)

The image exposing apparatus according to any one of the Structures (1) to (4), wherein writing density of the array light source is established to be 440 dpi or less.

Usually, streaks are conspicuous when the writing density is 440 dpi or less. However by combining the limitations of any of the Structures 1 - 4, it is possible to make the streaks not to be conspicuous.

### BRIEF DESCRIPTION OF THE DRAWINGS

Fig. 1 is a schematic perspective view showing the structure in the vicinity of the array light source of an image exposing apparatus relating to the first embodiment of the invention.
Fig. 2 is a schematic side view showing the total structure (excluding the structure in the vicinity of the array light source) of the image exposing apparatus shown in Fig. 1.
Fig. 3 is an illustration for illustrating arrangement of light emitting devices of the array light source of the image exposing apparatus shown in Fig. 1.
Fig. 4 is a block diagram showing an electric structure of the image exposing apparatus shown in Fig. 1.

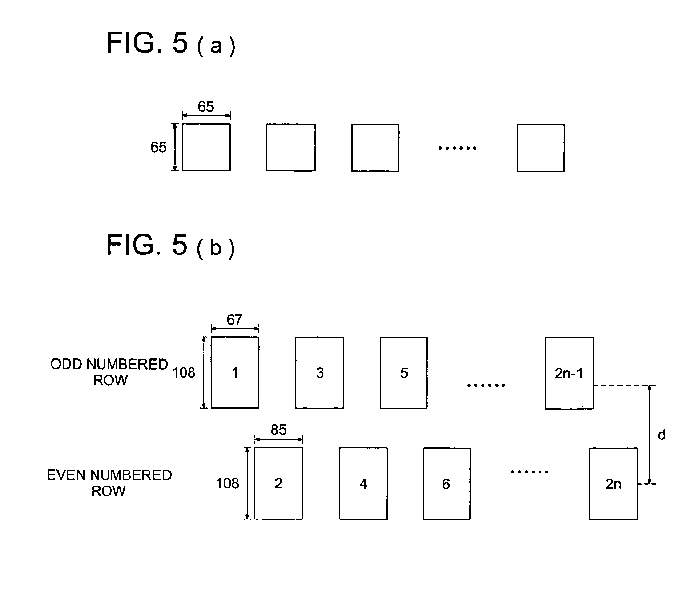

Each of Fig. 5 (a) and Fig. 5 (b) is an illustration for illustrating arrangement of light emitting devices of the array light source of the image exposing apparatus relating to the second embodiment of the invention.

Each of Fig. 6 (a) and Fig. 6 (b) is an illustration for illustrating a process of forming "streaks" which are formed when a conventional image exposing apparatus is used.

### DETAILED DESCRIPTION OF THE PREFERRED EMBODIMENT

An embodiment of the invention will be explained in detail as follows, referring to the drawings. In the present embodiment, an explanation will be given to an image exposing apparatus wherein prescribed exposure is given to a silver halide photosensitive material (a printing paper).

### (First Embodiment)

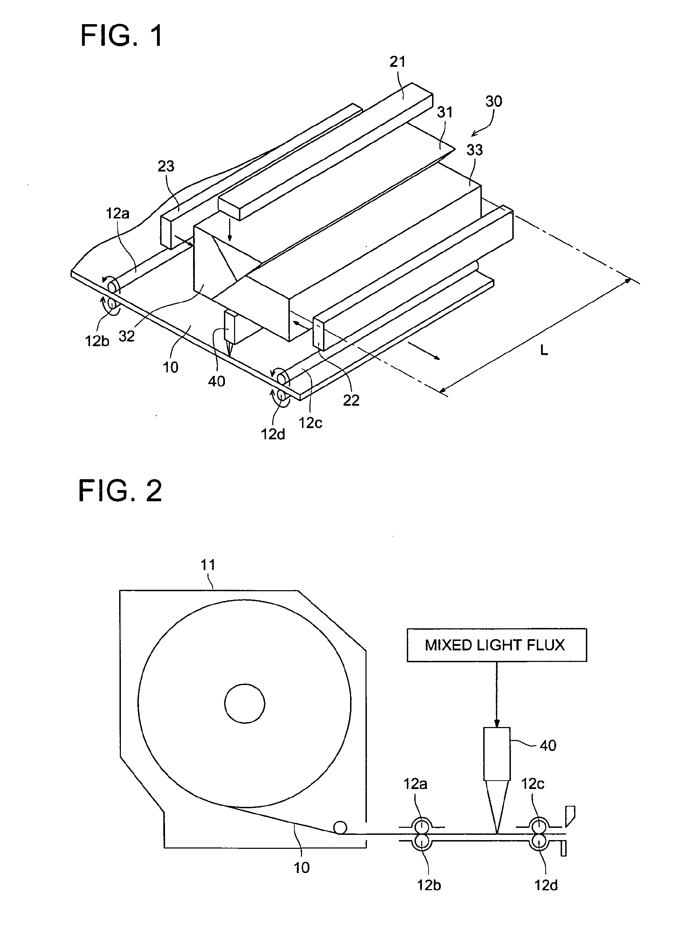

First, an overall structure of the image exposing apparatus relating to the First Embodiment will be explained as follows, referring to Fig. 1 - Fig. 4.

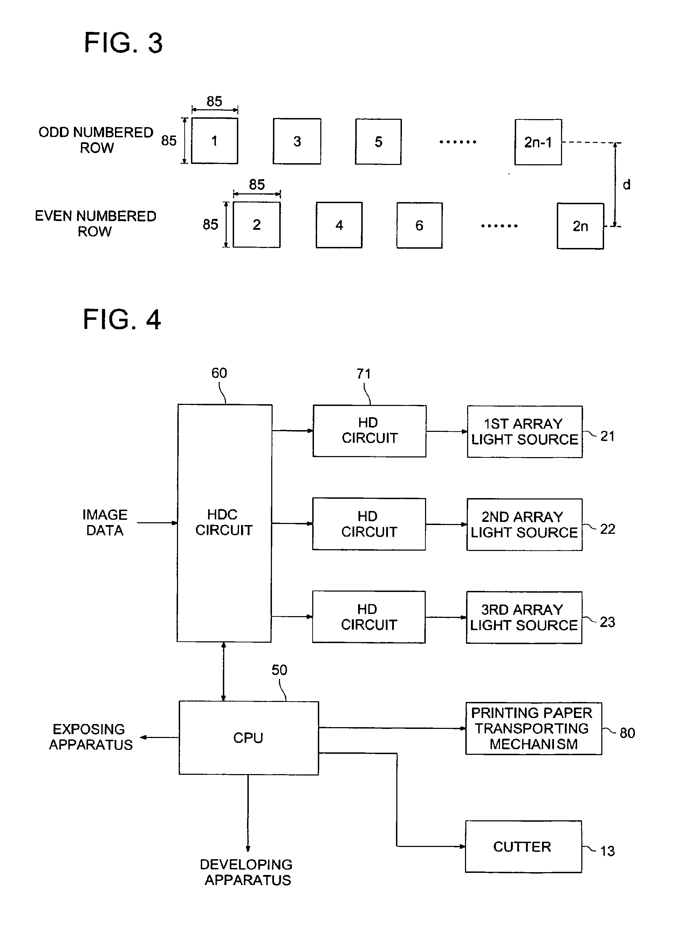

Fig. 1 is a schematic perspective view showing the structure in the vicinity of the array light source of an image exposing apparatus relating to the present embodiment and Fig. 2 is a schematic side view showing the overall structure (excluding the structure in the vicinity of the array light source) of the image exposing apparatus shown in Fig. 1. Fig. 3 is an illustration for illustrating arrangement of light emitting devices of the array light source of the image exposing apparatus shown in Fig. 1. Further, Fig. 4 is a block diagram showing an electric structure of the image exposing apparatus shown in Fig. 1.

As shown in Fig. 1 and Fig. 2, the image exposing apparatus relating to the present embodiment is provided with paper magazine 11 on which printing paper 10 representing a silver halide photosensitive material is wound in a roll shape to be held, driving rollers 12a, 12b, 12c and 12d which convey the printing paper 10 at a prescribed conveyance speed and cutter 13 that cuts exposed printing paper 10 into a prescribed size.

As shown in Fig. 1, the image exposing apparatus relating to the present embodiment is provided with first array light source 21 composed of light emitting devices in an array form conducting exposure with the first light (red), second array light source 22 composed of light emitting devices in an array form conducting exposure with the second light (green) and third array light source 23 composed of light emitting devices in an array form conducting exposure with the third light (blue). These first array light source 21 - third array light source 23 represent an array light source group in the invention.

The first array light source 21 is composed of a vacuum fluorescent print head (Vacuum Fluorescent Print Head: hereinafter referred to as "VFPH") representing light emitting devices arranged in an array form and of a red filter that converts light emitted from VFPH into red light. As shown in Fig. 3, the first array light source 21 has a zigzag arrangement wherein two rows of light emitting devices composed of arranged light emitting devices each being in size of 85 µm x 85 µm are arranged at prescribed interval of d. Namely, when numbers are given to light emitting devices as shown in Fig. 3, odd-numbered rows each being composed of a group of light emitting devices each having an odd number are arranged to be staggered in the longitudinal direction for even-numbered rows each being composed of a group of light emitting devices each having an even number. Incidentally, a distance between adjoining centers of light emitting devices in each row of odd-numbered rows and even-numbered rows is set to 85 µm.

Further, second array light source 22 is composed of VFPH and green filters, while, third array light source 23 is composed of VFPH and blue filters. Each of these second array light source 22 and third array light source 23 has a zigzag arrangement wherein two rows of light emitting devices composed of arranged light emitting devices each being in size of 85 µm x 85 µm are arranged at prescribed interval of d, in the same way as in the first array light source 21.

As shown in Figs. 1 and 2, the image exposing apparatus relating to the present embodiment is provided with dichroic prism (light-mixing means) 30 that mixes a light flux emitted from an array light source for each recording color, and makes respective light fluxes each having a different color to emerge through the same path. The dichroic prism 30 is provided with first transparent member 31 which is in a shape of a long triangular prism, second transparent member 32 which is in a shape of a long pentagonal prism and third transparent member 33 which is in a shape of a long quadratic prism, and longer side surfaces of respective transparent members are cemented each other.

On a cementing surface between the first transparent member 31 and the second transparent member 32 of the dichroic prism 30 and on a cementing surface between the second transparent member 32 and the third transparent member 33, there are provided respectively a first light selection film and a second light selection film (not shown) each transmits light or reflects light selectively in accordance with each wavelength. The first light selection film is one which transmits first light (red) and reflects third light (blue), while, the second light selection film functions to transmit the first light (red) and the third light (blue) and to reflect the second light (green).

As shown in Figs. 1 and 2, the image exposing apparatus relating to the present embodiment is provided with selfoc lens array (light-converging means) 40 that converges a light flux with each recording color mixed by the dichroic prism 30 on a photosensitive material for making exposure. In the present embodiment, selfoc lens array 40 in four rows or six rows is used.

As shown in Fig. 4, the image exposing apparatus relating to the present embodiment is provided with CPU 50 serving as a control means that controls each portion, head driver control circuit (HDC circuit) 60 that receives image data from the outside and generates image signals for driving an array light source for each color, head driver circuit (HD circuit) 71 that receives image signals of first light (red) coming from HDC circuit 31 and generates light-emitting signals for making a light emitting device of the first array light source 21 in accordance with gradation, head driver circuit (HD circuit) 72 that receives image signals of second light (green) coming from HDC circuit 32 and generates light-emitting signals for making a light emitting device of the second array light source 22 in accordance with gradation, head driver circuit (HD circuit) 73 that receives image signals of third light (blue) coming from HDC circuit 33 and generates light-emitting signals for making a light emitting device of the third array light source 23 in accordance with gradation, and printing paper conveyance mechanism 80 that is composed of a driving motor and driving rollers 12a, 12b, 12c and 12d.

Now, operations of the image exposing apparatus relating to the present embodiment will be explained. First, CPU 50 feeds out printing paper 10 at prescribed speed by means of the printing paper conveyance mechanism 80. Then, color image data coming from cameras and image processing circuits in the outside are separated to each color image signal in HDC circuit 60.

Then, HD circuits 71 - 73 which have received image signals in respective colors from HDC circuit 60 at the same timing generate light-emitting signals that make light emitting devices of array light sources to emit light in accordance with gradation of the image signals. First array light source 21 - third array light source 23 which have received the light-emitting signals from HD circuits 71 - 73 emit light in accordance with image signals for each color at the same timing.

Light emitted at the same timing from the first array light source 21 - the third array light source 23 enter the dichroic prism 30 from plural ends of incidence. Then, plural incident light each having a different color are mixed by transmission and reflection on the first light selection film and the second light selection film of the dichroic prism 30, to be outputted from a single end for emergence as emerging light. Printing paper 10 which has been completed in terms of exposure based on image data is cut by cutter 13 into a prescribed size to be developed by an unillustrated developing unit.

Next, there will be explained an experiment (hereinafter referred to as "First Experiment) made to establish a value of interval d of light emitting device rows of an array light source group (first array light source 21 - third array light source 23) of the image exposing apparatus relating to the present embodiment.

### (Background of First Experiment)

A background of the First Experiment will be explained. When array light sources in a zigzag arrangement (first array light source 21 - third array light source 23) are used as in the case of the present embodiment, an exposure line in one row is formed by combining exposure points of respective light emitting device rows, and therefore, "streaks" are easily formed on an image if dispersion of the exposure positions is caused, which has been mentioned earlier.

The "streaks" of this kind are emphasized especially in the case of using a silver halide photosensitive material (printing paper 10), and the reasons for the foregoing are guessed as follows. Though exposure energy is expressed by the product of luminance of a light source and exposure time, in general, a silver halide photosensitive material has complicated characteristics (relationship between exposure energy and density) that color forming characteristic on the occasion where exposures for the same color are conducted twice intermittently is different from that on the occasion where exposure is conducted once, independent of the total exposure energy that is the same for the both occasions. Further, since a silver halide photosensitive material is constructed by forming plural layers on a base paper called a support, the silver halide photosensitive material has a characteristic that light used for exposure is diffused by reflection and scattering between layers and inside the layer and by reflection and scattering on the base paper, and thereby, formed images are spread.

In this case, if an array light source having plural rows of light emitting devices is used as in the present embodiment, exposure timing is different for each light emitting devices row, resulting in intermittent exposure. Therefore, an amount of temperature rise of two-pixel overlapped portion 100 (see Fig. 5 (b)) caused by deviation of exposure positions and an amount of density decline of non-exposure portion 200 (see Fig. 5 (b)) are increased to be greater than an amount estimated from the characteristic curve of the silver halide photosensitive material an influence of characteristics which are peculiar to the silver halide photosensitive material representing a dominant cause (which is no more than a guess, and detailed mechanism is not clarified yet).

Accordingly, in the present embodiment, actualization of "streaks" which are formed in an image is prevented by establishing interval d for light emitting device rows of the first array light source 21 - third array light source 23 to an appropriate value based on results of the First Experiment.

### (Procedures of First Experiment and a method of evaluation)

Next, procedures of First Experiment and a method of evaluation will be explained. First, there are prepared a plurality of the first array light source 21, the second array light source 22 and the third array light source 23 wherein intervals d of light emitting device rows are established to various values. Then, images for measurement are formed under the condition of separation into odd-numbered rows and even-numbered rows.

Then, images for measurement thus formed are measured by a reflection densitometer of a scanning type and positional relationship between exposure positions of odd-numbered rows and exposure positions of even-numbered rows is obtained to calculates the maximum value of a difference from a design value (amount of deviation of pixel δ : see Fig. 6 (b)). The calculation of this kind for amount of deviation of pixel δ was conducted for each of fifty selfoc lens arrays 40 (in 4 rows) to obtain a distribution, and a value obtained by adding doubled standard deviation to a mean value was made to be an evaluation value (evaluation of an amount of deviation of a pixel).

Further, gray solid images having uniform density of 0.8 are formed. Then, after observing the gray solid images thus formed, there was conducted evaluation wherein "NG" represented an occasion where "streaks" were observed and "G" represented an occasion where "streaks" were not observed (visual evaluation).

### (Results of First Experiment)

Results of the First Experiment made by following the procedures stated above are shown in Table - 1.
Incidentally, in the present embodiment, intervals d for light emitting device rows were established to be in five types including "150 µm", "250 µm", "500 µm", "1000 µm" and "1500 µm" (see Table - 1).

**Table 1**

| | | | | | |
|---|---|---|---|---|---|
| Distance between light emitting device rows "d" (µM) | 150 | 250 | 500 | 1000 | 1500 |
| Amount of deviation of pixel δ (µm) | 2.1 | 5.2 | 8.0 | 12.8 | 15.6 |
| Streaks (visual observation) | G | G | G | NG | NG |
| G; No streaks are observed. | | | | | |
| NG; Streaks are observed. | | | | | |

As is clear from Table - 1, when interval between light emitting device rows "d" is not more than 500 µm, absence of "streaks" in a gray solid image was confirmed (visual evaluation: "G"). Incidentally, it is understood that an amount of deviation of a pixel δ is a minute value (10 µm or less) when interval between light emitting device rows "d" is not more than 500 µm. On the other hand, it was confirmed that "streaks" were observed in a gray solid image when interval between light emitting device rows "d" exceeded 500 µm (visual evaluation: "NG"). After conducting the First Experiment by using 50 selfoc lens arrays 40 each being in 6 rows, the results which are substantially the same were obtained.

From the results of the aforementioned First Experiment, it was confirmed that actualization of "streaks" caused by dispersion of exposure positions of light emitted from the array light source group can be prevented by establishing interval between light emitting device rows "d" in the first array light source 21 - the third array light source 23 to be 500 µm or less. The reason why actualization of "streaks" can be prevented as stated above is estimated to be one wherein, when interval between light emitting device rows "d" is 500 µm or less, the influence of coloring characteristics which are peculiar to the silver halide photosensitive material in intermittent exposure is less.

In the present embodiment, there were also made experiments (hereinafter referred to as "Second Experiment" and "Third Experiment") for establishing writing density (dpi) of array light source group (first array light source 21 - third array light source 3) of an image exposing apparatus, in addition to the aforementioned First Experiment. The Second Experiment and the Third Experiment will be explained as follows.

### (Procedures of Second Experiment and a method of evaluation)

First, procedures of Second Experiment and a method of evaluation will be explained. First, there are prepared a plurality of the first array light source 21, the second array light source 22 and the third array light source 23 wherein writing densities D are established to various values. Incidentally, it is assumed that amount of deviation of a pixel δ can be set to a value (1 µm or less) which is substantially negligible if these array light source groups are used, and no "streaks" are formed.

Then, uniform gray solid images having density of 0.8 for each writing density D are formed by using selfoc lens arrays 40 in four rows. After that, the gray solid images thus formed are observed to conduct evaluation wherein "NG" represents an occasion where scanning lines are observed in images and "G" represents an occasion where no scanning lines are observed (visual evaluation).

### (Results of Second Experiment)

Results of the Second Experiment made by the procedures stated above are shown in Table - 2. Incidentally, in the present embodiment, intervals d for light emitting device rows writing densities D were established to be in five types including "180 dpi", "210 dpi", "300 dpi", "440 dpi" and "520 dpi" (see Table - 2). Further, a size of a light emitting device in each writing density D and an interval between light emitting devices are shown in Table - 2.

**Table 2**

| | | | | | |
|---|---|---|---|---|---|
| Writing density D (dpi) | 180 | 210 | 300 | 440 | 520 |
| Light emitting device size (µm x µm) | 141 x 141 | 121 x 121 | 85 x 85 | 58 x 58 | 49 x 49 |
| Interval of light emitting devices (µm) | 141 | 121 | 85 | 58 | 49 |
| Scanning line (visual observation) | NG | G | G | G | G |

As is clear from Table - 2, it was confirmed that scanning lines were observed when writing density D is less than 210 dpi (visual evaluation: "NG") and scanning lines were not observed when writing density D is not less than 210 dpi (visual evaluation: "G"). Namely, it is understood that scanning lines are conspicuous and image quality is lowered when writing density D is low (namely, when a size of light emitting device is large), even when no "streaks" are formed because of amount of deviation of a pixel δ which is substantially negligible. In the present embodiment, therefore, writing density D of the first array light source 21 - the third array light source 23 is established to be 210 dpi or more.

### (Procedures of Third Experiment and a method of evaluation)

Next, procedures of Third Experiment and a method of evaluation will be explained. First, there are prepared a plurality of the first array light source 21, the second array light source 22 and the third array light source 23 wherein writing densities D are established to various values. Further, interval between light emitting device rows "d" in the array light source group was set to be about 1000 µm, so that "streaks" may be formed intentionally.

Then, uniform gray solid images having density of 0.8 for each writing density D were formed by using selfoc lens arrays 40 in four rows. After that, the gray solid images thus formed were observed to conduct evaluation wherein "NG" represents an occasion where "streaks" were observed in images and "G" represents an occasion where no "streaks" were observed (visual evaluation).

### (Results of Third Experiment)

Results of the Third Experiment made by the procedures stated above are shown in Table - 3. In the present embodiment, writing densities D were established to be in five types including "180 dpi", "210 dpi", "300 dpi", "440 dpi" and "520 dpi" (see Table - 3)

**Table 3**

| | | | | | |
|---|---|---|---|---|---|
| Writing density D (dpi) | 180 | 210 | 300 | 440 | 520 |
| Light emitting device size (µm x µm) | 141 x 141 | 121 x 121 | 85 x 85 | 58 x 58 | 49 x 49 |
| Interval of light emitting devices (µm) | 141 | 121 | 85 | 58 | 49 |
| Streaks (visual observation) | NG | NG | NG | NG | G |

As is clear from Table - 3, it was confirmed that "streaks" were observed when writing density D is not more than 440 dpi (visual evaluation: "NG") and "streaks" were not observed when writing density D exceeds 440 dpi (visual evaluation: "G"). Namely, it is understood that "streaks" are made to be minute and are not recognized by human visual characteristic when writing density D of the first array light source 21, the second array light source 22 and the third array light source 23 exceeds 440 dpi, even when interval between light emitting device rows "d" is set to be about 1000 µm to form "streaks" intentionally.

Therefore, when writing density D of the first array light source 21 - the third array light source 23 is not more than 440 dpi, in particular, it is necessary to prevent forming of "streaks" by establishing interval between light emitting device rows "d" to be 500 µm or less.

Since the interval between light emitting device rows "d" of the array light source in a zigzag arrangement (first array light source 21 - third array light source 23) is established to be within 500 µm, in the image exposing apparatus relating to the embodiment explained above, it is possible to prevent actualization of "streaks" formed by a cause of dispersion of exposure positions by light emitted from the array light source group, which results in prevention of a decline of image quality.

In the image exposing apparatus relating to the present embodiment, it is possible to make a distance from the array light source group (first array light source 21 - third array light source 23) to selfoc lens array 40 to be relatively long, and thereby to ease restriction for parts arrangement. As a result, an increase of manufacturing cost can be controlled.

In the image exposing apparatus relating to the present embodiment, it is possible to prevent actualization of scanning lines, because writing density of the array light source group (first array light source 21 - third array light source 23) is established to be 210 dpi or more (300 dpi). Namely, when writing density of the array light source group (first array light source 21 - third array light source 23) is lower than 210 dpi, image quality is lowered even when no "streaks" are formed because scanning lines become conspicuous. However, it is possible to make scanning lines not to be conspicuous by setting writing density of the array light source group (first array light source 21 - third array light source 23) to be 210 dpi or more, and thereby to prevent a decline of image quality.

### (Second Embodiment)

Next, an image exposing apparatus relating to the Second Embodiment will be explained as follows, referring to Fig. 5. The image exposing apparatus relating to the present embodiment is one wherein the structure of the array light source of the image exposing apparatus relating to the first embodiment is modified, and other structures are substantially the same. Therefore, explanation for the overlapped structures will be omitted. Fig. 5 is an illustration for illustrating a light emitting device arrangement of the array light source of the image exposing apparatus relating to the present embodiment.

In the present embodiment, the first array light source composed of an array-shaped light emitting device that makes exposure for the first light (red) comprises light emitting devices in a single row which are made up of arranged LEDs each having a size of 65 µm x 65 µm, as is shown in Fig. 5 (a). Incidentally, a distance between centers of light emitting devices in a row is set to 85 µm.

Further, the second array light source is composed of VFPH and a green filter, and the third array light source 23 is composed of VFPH and a blue filter. As shown in Fig. 5 (b), each of these second array light source 22 and third array light source 23 has a zigzag arrangement wherein two rows of arranged light emitting devices each having a size of 67 µm x 108 µm are placed in order at a prescribed interval d. Incidentally, a distance between adjoining centers of light emitting devices in each row of odd-numbered rows and even-numbered rows is set to 85 µm.

Experiments (hereinafter referred to as "Fourth Experiment") conducted for establishing a value of interval between light emitting device rows "d" for the first array light source - third array light source will be explained. Incidentally, since the background of the Fourth Experiment is the same as that of the First Experiment explained in the first embodiment, explanation will be omitted.

### (Procedures of Fourth Experiment and a method of evaluation)

First, there are prepared a plurality of the first array light source, the second array light source and the third array light source wherein interval between light emitting device rows "d" is established to be different each other. Further, interval between light emitting device rows "d" in the array light source group was set to be about 1000 µm, so that "streaks" may be formed intentionally. Then, for each interval between light emitting device rows "d", images for measurement are formed in the situation where the rows are divided into odd-numbered rows and even-numbered rows.

After that, images for measurement thus formed are measured by a reflection densitometer of a scanning type and positional relationship between exposure positions of odd-numbered rows and exposure positions of even-numbered rows is obtained to calculates the maximum value of a difference from a design value (amount of deviation of pixel δ : see Fig. 6 (b)). The calculation of this kind for amount of deviation of pixel δ was conducted for each of fifty selfoc lens arrays 40 (in 4 rows) to obtain a distribution, and a value obtained by adding doubled standard deviation to a mean value was made to be an evaluation value (evaluation of an amount of deviation of a pixel).

Further, gray solid images having uniform density of 0.8 are formed for each. Then, after observing the gray solid images thus formed, there was conducted evaluation wherein "NG" represented an occasion where "streaks" were observed and "G" represented an occasion where "streaks" were not observed (visual evaluation).

### (Results of Fourth Experiment)

Results of the Fourth Experiment made by the procedures stated above are shown in Table - 4. In the present embodiment, interval between light emitting device rows "d" were established to be in two types including "253.8 µm" and "1945.8 µm" (see Table - 4)

**Table 4**

| | | |
|---|---|---|
| Interval between light emitting device rows "d" (µm) | 263.8 | 1945.8 |
| Amount of pixel deviation δ (µm) | 2.1 | 20.2 |
| Streaks (visual observation) | G | NG |

As is clear from Table - 4, it was confirmed that no "streaks" were observed in a gray solid image when interval between light emitting device rows "d" is not more than 500 µm (visual observation: "G") and "streaks" were observed in a gray solid image when interval between light emitting device rows "d" exceeded 500 µm (visual evaluation: "NG"). After conducting the Fourth Experiment by using 50 selfoc lens arrays 40 each being in 6 rows, the results which are substantially the same were obtained.

From the results of the Fourth Experiment stated above, it was confirmed that actualization of "streaks" which are formed by a cause of dispersion of exposure positions of light emitted from the array light source group can be prevented by establishing the interval between light emitting device rows "d" for the first array light source - third array light source to be 500 µm or less.

In the image exposing apparatus relating to the embodiment stated above, the interval between light emitting device rows "d" for the array light source in a zigzag arrangement (second array light source and third array light source) is established to be within 500 µm, and therefore, it is possible to prevent actualization of "streaks" which are formed by a cause of dispersion of exposure positions of light emitted from the array light source group, which results in prevention of a decline of image quality.

Incidentally, though a dichroic prism is employed as a light mixing means in the aforementioned embodiment, it is also possible to employ a dichroic mirror and an aggregate of optical fibers that mixes light fluxes entering plural ends of incidence and transmits them to one end of emergence, as a light mixing means.

### (Effect of the invention)

In the invention described in Structure (1), an interval between light emitting device rows of the array light source in a zigzag arrangement is established to be within a specific range (within 500 µm), thus, it is possible to prevent actualization of "streaks" which are formed by a cause of dispersion of exposure positions of light emitted from the array light source group. As a result, a decline of image quality can be prevented.

In the invention described in Structure (2), selfoc lens arrays in plural rows each being a lens with a large aperture are employed as a light-converging means, thus, it is possible to make a distance from an array light source group to the light-converging means to be relatively long and to ease restriction on parts arrangement. As a result, an increase of manufacturing cost can be controlled.

In the invention described in Structure (3), it is possible to prevent actualization of scanning lines because writing density for the array light source group is set to 210 dpi or more. Therefore, a decline of image quality can be prevented.

## Claims

1. An image exposing apparatus for exposing an image on a silver halide photosensitive material, comprising:
an array light source for emitting a light image, the array light source comprising a plurality of rows of light emitting devices, each of the plurality of rows of light emitting devices having a plurality of light-emitting devices arranged in a form of a line, and at least one of adjoining two rows of the plurality of rows of light-emitting devices being shifted in the longitudinal direction to form a zigzag arrangement of light emitting devices; and
a light converging device for converging the light image emitted from the array light sources onto a silver halide photosensitive material,
wherein an interval between each of the plurality of rows of light-emitting device is not larger than 500 µm.

2. The image exposing apparatus of claim 1, wherein the image exposing apparatus comprises a plurality of the array light sources, and further comprising:
a light mixing device for mixing light images emitted from the plurality of the array light sources to form and emit a mixed light image in a line to the light converging device.

3. The image exposing apparatus of claim 1 or claim 2, wherein the light converging device is a selfoc lens array in which a plurality of rows of selfoc lens elements are arranged.

4. The image exposing apparatus of claim 1 or claim 2, wherein a writing density of the array light sources is not less than 210 dpi.

5. The image exposing apparatus of claim 3, wherein a writing density of the array light sources is not less than 210 dpi.

6. The image exposing apparatus of claim 1 or claim 2, wherein the writing density of the array light sources is not greater than 440 dpi.

7. The image exposing apparatus of claim 3, wherein the writing density of the array light sources is not greater than 440 dpi.

8. The image exposing apparatus of claim 4, wherein the writing density of the array light sources is not greater than 440 dpi.
